# EUROPEAN PATENT APPLICATION

(11) **EP 0 539 099 A2**
(43) Date of publication of application: **28.04.1993**
(21) Application number: 92309432.0
(22) Date of filing: 15.10.1992
(51) Int. Cl.: C09J 183/06, C09J 153/08, G02F 1/01, C09J 151/08

(54) **Repositionable optical cover for monitors**

(30) Priority: 25.10.1991 US 781304
(71) Applicant: OPTICAL COATING LABORATORY, INC., Santa Rosa, California 95407-7397 (US)
(72) Inventor: Sherman, Edward S., Santa Rosa, CA 95409 (US)
(74) Representative: Bayliss, Geoffrey Cyril

(57) **Abstract**

The disclosure relates to a respositionable, self-adhering optical laminate (10) having a thin film optical coating (15), an organic hardcoat (14), a thin plastic film substrate (11), an optical quality, pressure sensitive adhesive (12) and, preferably, a release liner (13). The pressure-sensitive adhesive is low modulus, self-wetting elastomer which readily wets glass and plastic surfaces such as video display screens, promoting bubble-free mounting. The adhesive has low tack so that bubbles can be removed easily and the laminate can be totally or partially removed and reapplied to correct its positioning and/or to remove bubbles, dirt, etc.

## Description

The present invention relates to adhesives for mounting a first article such as a laminated optical panel or plate to a second article such as the viewing screen or face plate of a video display. The present invention also relates to the articles which incorporate the adhesive. In particular, the present invention relates to self-adhering optical filter covers for video displays, including computer monitors, televisions and the like.

Self-adhering optical covers such as anti-glare filters are available for video displays such as computer or television monitors. Perhaps the very latest technology is embodied in our HEA 2000 anti-glare cover. This filter is a laminate comprising a thin, optically clear PET (polyester) substrate having a high-efficiency, anti-reflection thin film coating on one major surface and a self-adhering coating of high-tack adhesive on the other. The high-tack adhesive coating mounts the filter directly to the viewing screen of the monitor.

Despite the excellent anti-glare characteristics afforded by the HEA coating, like all things made by man, the HEA 2000 filter is imperfect. Specifically, mounting the HEA 2000 anti-glare filter to a monitor screen requires the application of uniform pressure across the face of the filter. As a consequence, mere manual application (using a straight-edge or the like) is unsuitable. Rather, special tooling must be used. Also, because the filter is permanently mounted to the monitor screen (due to the high-tack characteristics of the adhesive), the inclusion of dirt, air bubbles, etc., which degrade the optical performance, must be avoided. If dirt or bubbles are present, the only alternative to degraded optical performance is to replace the screen or face plate of the monitor.

In short, typical prior art products cannot be repositioned if they are incorrectly positioned on the associated video display screen, or if air bubbles, dirt, etc. are trapped during mounting on the video display screen. Obviously, it is desirable to have a filter with the optical characteristics of the HEA 2000 product, and the additional benefit of bubble-free application and ease or application and reapplication.

This invention provides an optical cover which comprises a substantially transparent plastic panel; an optical coating formed on one side of the panel; and a low-tack, self-wetting adhesive coating formed on one side of the panel for releasably adhering and readhering the panel to a surface such as the viewing screen or face plate of a video display.

The invention also provides an optical cover which comprises a substantially transparent plastic panel; an optical coating formed on one side of the panel; and a low-tack, self-wetting adhesive coating formed on one side of the panel, and comprising acrylic-silicone copolymer formed from a composition comprising ≧ 30% by weight acrylate or vinyl functional poly(dimethylsiloxane) oligomer, ≧ 20% by weight acrylate monomer, and ≦ 5% by weight photoiniator, for releasably adhering and readhering the panel to a surface such as the viewing screen or face plate of a video display.

The invention further provides a process for forming an adhesive coating on a panel suitable for effecting the releasable adherence and readherence of the panel to an article such as the face or viewing screen of a monitor, comprising: forming on a first major surface of the panel a coating of composition comprising (1) at least one oligomer having an end group selected from vinyl and acrylate end groups; (2) a monomer having side chains selected from n-hexyl, 2-ethylhexyl, butyl and lauryl; and (3) a photoiniator; and curing the coatings with UV radiation, thereby providing an adhesive coating having low-tack, self-wetting properties.

The invention also provides a method of mounting a plastic panel, having major surfaces on opposite sides thereof, to the face of a monitor, comprising: forming a low-tack, self-wetting releasable adhesive coating on a first major surface of the panel by forming on the first major surface of the panel a coating comprising at least one oligomer having an end group selected from vinyl and acrylate end groups, a monomer having side chains selected from n-hexyl, 2-ethylhexyl, butyl and lauryl, and a photoinitiator; curing the coatings with UV radiation; positioning the coated first major surface of the panel against the face of the monitor; and applying pressure against the panel to adhere the panel to the face of the monitor.

The adhesive coating may be an elastomeric polymer formed by UV radiation curing of a combination of (1) at least one oligomer having an end group selected from vinyl and acrylate end groups, (2) an acrylate monomer having side chains selected from iso-decyl, n-decyl, n-hexyl, 2-ethylhexyl, butyl and lauryl; and (3) a photoinitiator. The optical coating may be selected from an anti-reflection coating and a reflection coating. Also, the optical coating may be selected from a band pass filter, a short wave pass filter, and a long wave pass filter.

In other aspects, the oligomer may be selected from the composition at least (methacryloxypropyl)methyl-dimethylsiloxane copolymer and from the composition (methacryloxypropyl)methyl-dimethylsiloxane copolymer and (methacryloxypropyl)methyl terminated-(dimethylsiloxane); and the monomer comprises lauryl acrylate.

In another aspect, the mononer is isodecyl acrylate, and the concentration of the (methacryloxypropyl)methyl-dimethylsiloxane copolymer oligomer is 57 percent by weight, the concentration of the monomer is 38 percent by weight and the concentration of the photoinitiator is 5 percent by weight.

In still another aspect, the monomer is lauryl acrylate, the oligomer comprises (methacryloxypropyl)methyl-dimethylsiloxane copolymer and (methacryloxypropyl)methyl terminated-(dimethylsiloxane) oligomer, the concentration of (methacryloxypropyl)methyl-(dimethylsiloxane)-copolymer is about 37 percent by weight, the concentration of the (methacryloxypropyl)methyl terminated-dimethylsiloxane is about 29 percent by weight and the concentration of the photoinitiator is about 5 percent by weight.

The above and other aspects of our invention are described below with respect to the drawing, in which:
FIG. 1 is a schematic cross-section view of a self-adhering anti-glare filter which incorporates a preferred embodiment of our invention; and
FIG. 2 is a perspective view of a video display device such as a computer monitor or television screen having the anti-glare filter of FIG. 1 mounted to its faceplate.

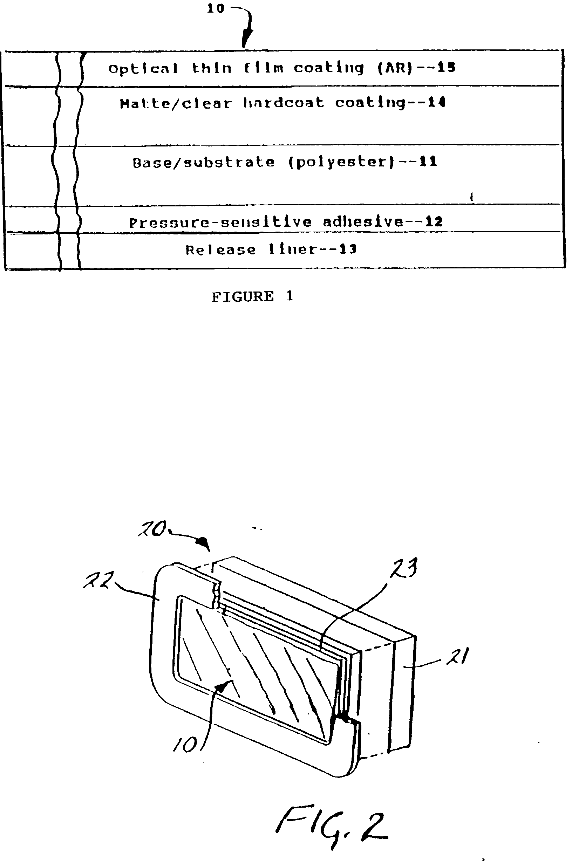

Referring to FIGS. 1 and 2, in a presently preferred embodiment, our invention is embodied in a self-adhering anti-glare filter 10 or other viewing device for a display device such as a monitor 20. Typically, the monitor comprises a housing 21 and a front bezel 22 which is mounted to the housing 21 and incorporates a faceplate or video display screen 23. The laminate device 10 is mounted over the faceplate 23 of the display device. Typically the front bezel 22 covers and protects the edges of the faceplate 23. The display device 20 may be a flat or cylindrically curved cathode ray tube (CRT) or alternatively, any flat panel display such as a light emitting diode (LED), electroluminescent display or liquid crystal display (LCD). The display faceplate 20 can be formed of glass for CRTs and electroluminescent displays, or of organic polymer linear polarizer films for LCDs. In some case, an LCD linear polarizer is protected from damage by a faceplate molded of polycarbonate or acrylic resins, which are more scratch resistant than the soft organic LCD material.

Referring further to the cross-sectional view of FIG. 1, in the preferred embodiment, our device 10 is a laminate which comprises: a thin plastic film base or substrate 11, preferably of optically clear polyester film material (polyethylene terepthalate or PET); an optical quality, low-tack, self-adhering, pressure sensitive adhesive coating 12 formed on one major surface of the substrate; a standard protective release liner or cover 13 releasably formed on the layer of adhesive; an organic hardcoat coating 14, either matte or clear, formed on the opposite major surface of the substrate; and an optical quality, thin film coating 15 formed on top of the hardcoat coating. The optical coating 15 can be any of several available coatings, including anti-reflection, reflection and/or band-pass filter coatings.

Alternatively, the base/subtrate 11 and the matte/clear hardcoat coating 14 can be replaced by a glass sheet. This embodiment permits the application and reapplication of the device 10 to various optical surfaces, but allows the use of extremely durable optical thin film coatings, or permits the placement of an etched glass surface over an existing display faceplate. An etched glass faeplate is a desirable alternative to a molded faceplate consisting of polycarbonate or acrylic resin because it is extremely durable and will not be damaged by contact from accidental pen contact or pointer contact or deliberate contact from a pen entry device.

Alternatively, the device 10 can be mounted to other flat or cylindrically curved surfaces within optical systems or assemblies to provide a retro-fitted and replaceable anti-reflection coating, a reflection surface, or a bandpass filter when the design of the thin film 15 is changed.

An example of a suitable release liner is the product supplied by E. I. DuPont de Nemours and Company under the tradename TST20SG4. A suitable polyethylene terephthalate (PET) substrate material is available from ICI Americas, Inc. under the tradename MELINEX 561. Hardcoat coatings are well known and widely used in the relevant art for protecting relatively soft plastic substrates and providing a durable base for optical coatings. Typically we use a frontside 72 or 110 gloss matte finish hardcoat or a frontside clear finish hardcoat. One suitable gloss or matte hardcoat material is the MARNOT XL Plus product supplied by TEKRA Corporation.

### Adhesive Formulation and Repositionable Laminate

The adhesives which embody my present invention provide clear, transparent, low modulus elastomers which can be readily formed as 0.5 to 2 mil thick coatings on transparent plastic films, providing repositionable adhesive laminates. These adhesives are repositionable because they can be peeled from the substrate with sufficiently low force that no permanent deformation of the adhesive occurs. Permanent deformation of the adhesive creates a rough and/or distorted adhesive surface, which entraps air bubbles on reapplication to the substrate. A low adhesive force permits easy removal of the laminate and avoids excess stress or bending of the film which could crack or craze the hardcoat and/or optical thin film coating.

The adhesive formulation which I have invented that exhibit such physical properties comprise three basic components: first, an oligomer having either reactive vinyl or acrylate end groups or side chains; second, an acrylic monomer having n-hexyl, iso-decyl, n-decyl, 2-ethylhexyl, butyl or lauryl side chains; and third, an ultraviolet light (UV) sensitive photoinitiator component. An elastomeric adhesive coating 12 of the desired properties can be formed on the substrate 11 using known methods of organic coating and film converting to apply a liquid coating of my new formulation, of thickness selected to provide the desired as-cured thickness (typically about 0.5 mils to about 5 mils), then curing the liquid coating (that is, polymerizing the coating to produce an elastomer) in line by exposing it to UV radiation. During the UV curing, the photoinitiator decomposes, generating free radicals which initiate the polymerization reaction. The growing polymer chains react with the monomer and the oligomer to form a polymer network or elastomer. The elastomeric properties of this network are derived from the chemical structure and the chain flexibility of the oligomer and the monomer, and from the distance between crosslinks in the polymer network. The distance between crosslinks is determined by the density of reactive groups in the oligomer and by the molecular weight and the proportions of the oligomer and the monomer.

Those of usual skill in the art of organic coating technology will recognize that equivalent performance can be obtained for coatings of the same and greater thickness and composition by eliminating the photoiniator component and using electron beam irradiation as a method of generating free radicals to initiate polymerization.

Preferably, the oligomer has a glass transition temperature ≦ 5 °C so that an elastomeric coating forms at ambient temperatures; the acrylic monomer is compatible/soluble in the oligomer so that a transparent, non-light-scattering adhesive forms during the polymerization; and the acrylic monomer is capable of forming a homopolymer with a glass transition temperature ≦ 0 °C so that an elastomeric coating is formed at ambient temperatures. In addition, the preferred photoiniator is soluble in the monomer and in the oligomer so that a transparent coating is formed. The oligomer should have low odor and should not form colored complexes during UV light curing or as the result of the normal exposure to light during the useful product lifetime.

TABLE 1 at page 12 below summarizes formulations which embody my invention and have the desired ease of fabrication and as-cured properties. These useful formulations (TABLE 2 as well as TABLE 1) form acrylic-silicone elastomer comprising ≧ 30% by weight silicone; ≧ 20% by weight acrylate monomer; and typically ≦ 5% by weight photoiniator. These formulations provide adequate physical properties (optical clarity, no significant color, sufficient strength and sufficient elongation), permitting their use in repositionable self-adhering optical laminates. In addition, the disclosed laminates are readily self-adhered to surfaces of various materials, including glass, plactic (polycarbonates, acrylics, etc.), linear polarizers, etc.

TABLE 2 at page 13 discloses a presently preferred adhesive formulation or composition. When cured with UV radiation or electron beam radiation, this composition forms a transparent, colorless, self-wetting adhesive material which is stable to additional UV light and heat and the combination of heat and humidity. The adhesive will wet a glossy or textured surface without the application of continuous laminating pressure as applied by a blade or rubber roller device. Textured surfaces are frequently used on the faceplate coatings on linear polarizers found on LCDs. The textured surface is frequently an organic hardcoating to offer some scratch protection to the linear polarizer and reduce glare by scattering reflected light. Application without continuous laminating pressure to a textured mounting surface will result in initial entrapment of micro-bubbles between the adhesive and the lowest points of the mounting surfaces, as the adhesive will initially rest on the highest points of the surface. It is desirable to eliminate these micro-bubbles because they have a high contrast and interfere with viewing of the display image.

The micro-bubbles are eliminated in our invention because the adhesive flows to wet the lowest points on the surface and fill the surface asperities. The wet out and flow of the adhesive occurs without pressure within 30 seconds to 2 minutes. Because the adhesive bond is of low strength the adhesive laminate can be removed from the mounting surface and more accurately positioned or partially removed from the mounting surface to clean dirt residue or lint which was initially on the mounting surface which will cause the formation of large bubbles. Alternatively, large bubbles can frequently be removed by pushing them to the edge of the film or cover using the edge of a ruler or rigid plastic sheet, etc.

| TABLE 1 | | | | | | |
|---|---|---|---|---|---|---|
| Material | Trade Name/Chemical Name | Composition (% Weight) | | | | |
| | | 1 | 2 | 3 | 4 | |
| Oligomer | Huls/Petrarch PS851 (methacryloxypropyl)methyl-dimethylsiloxane copolymer | 57 | 37 | -- | -- | |
| | Huls/Petrarch PS583 (methacryloxypropyl)methyl terminated-dimethylsiloxane polymer | -- | 29 | -- | -- | |
| | Radcure Ebecryl^{·} 1701 acrylated acrylic | -- | -- | -- | 47.5 | |
| | Sartomer CN965 aliphatic urethane acrylate | -- | -- | 47.5 | -- | |
| Monomer | Lauryl Acrylate | 38 | 29 | 47.5 | 47.5 | |
| Photoinitiator | Ciba-Geigy Irgacure^{·} 184 | 5 | 5 | 5 | 5 | |

| TABLE 2 | | | |
|---|---|---|---|
| Material | Trade Name/Chemical Name | Composition (% Weight) | |
| Oligomer | Huls America Inc. PS583 methacryloxypropyl end capped polydimethylsiloxane | Prepolymer 60 | |
| | Sartomer SR 395 iso-decyl acrylate | 33 | |
| Monomer | Sartomer SR 9003 propoxylated neopentyl glycol diacrylate | 2 | |
| Photoinitiator | Ciba-Geigy Irgacure^{·} 184 | 5 | |

As an alternative to curing prior to application, the above adhesive formulations can be used is laminating adhesives. That is, the laminate 10, FIG. 1, is positioned on the receiving surface such as the monitor and then cured in place.

### Examples

Presently preferred anti-reflection laminates comprise a 1 to 2 mil thick adhesive coating of the composition listed in TABLE 2; a 1 to 5 QWOT (quarter wave optical thickness) thin film inorganic anti-reflection coating; a 3 to 7 mil thick substrate of polyester material; a 1 to 3 micron thick organic hardcoat or MARNOT XL PLUS material; and a polyester release liner about 1 mil thick.

### Alternative Thermally-cured Adhesives

Silicone prepolymers are an alternative, although not presently preferred, class of adhesives. These materials are not preferred because, for example, generally they require a long thermal cure process. However, they do have many of the requisite physical properties, including low tack and peel strength and good environmental staability, and thus can be used in repositionable optical laminates. Specifically, the solvent-based silicone available from Huls/Petrarch as product PS253 has adequate physical properties for the application. This material can be applied as a thin coating using doctor blade or other suitable techniques. Next, the solvent is evaporated at room temperature, and the coating is cured overnight (typically, 8 hours), again at room temperature. Alternatively, the evaporation and curing can be accelerated by exposure to elevated temperatures. For example, 80 °C effects evaporation and curing in about 2 hours.

### Alternative UV/Electron Beam Cured Adhesives

An alternative, but not presently preferred class of adhesives are acrylated polyesters manufactured by Huls, America, Inc. There materials are known by the trade names DYNACOLL A. These materials are not preferred because they require continuous pressure to laminate to a textured surface to avoid the entrapment of micro-bubbles between the adhesives and the mounting surface's lowest points. Huls DYNACOLL A grades A 2550 and similar grades do exhibit the other desirable properties claimed in this invention, that is, they are repositionable, self-wetting and large bubbles can frequently be removed by pushing them to the edge of the film or cover using the edge of a ruler or rigid plastic sheet, etc. However, these adhesive materials absord considerably more blue light than the formulations in Tables 1 and 2, giving them a yellow color. This requires that the adhesive thickness remain less than 2 mils, preferably less than 1 mil, to avoid changing the color of the display image.

Based upon the above disclosure of preferred and alternative embodiments of our invention, those of usual skill in the art will readily derive alternatives and implement modifications which are equivalent to our invention and within the scope of the Claims of this patent document.

## Claims

1. An optical cover, comprising:
a substantially transparent plastic panel;
an optical coating formed on one side of the panel; and
a low-tack, self-wetting adhesive coating formed on one side of the panel for releasably adhering and readhering the panel to a surface such as the viewing screen or face plate of a video display.

2. An optical cover, comprising:
a substantially transparent plastic panel;
an optical coating formed on one side of the panel; and
a low-tack, self-wetting adhesive coating formed on one side of the panel, the adhesive coating comprising acrylic-silicone copolymer formed from a composition comprising ≧ 30% by weight acrylate or vinyl functional poly(dimethylsiloxane) oligomer, ≧ 20% by weight acrylate monomer, and ≦ 5% by weight photoiniator, for releasably adhering and readhering the panel to a surface such as the viewing screen or face plate of a video display.

3. The cover of Claim 2, in which the adhesive coating comprises an elastomeric polymer formed by UV radiation curing of a combination of (1) at least one oligomer having an end group selected from vinyl and acrylate end groups, (2) an acrylate monomer having side chains selected from iso-decyl, n-decyl, n-hexyl, 2-ethylhexyl, butyl and lauryl, and (3) a photoinitiator.

4. The cover of Claim 3, in which the optical coating is selected from an anti-reflection coating and a reflection coating.

5. The cover of Claim 3, in which the optical coating is selected from a band pass filter, a short wave pass filter, and a long wave pass filter.

6. The cover of Claim 3, in which the oligomer comprises at least (methacryloxypropyl)methyldimethylsiloxane copolymer.

7. The cover of Claim 6, in which the monomer comprises isodecyl acrylate.

8. The cover of claim 7, in which the concentration of the oligomer is 57 percent by weight, the concentration of the monomer is 38 percent by weight and the concentration of the photoinitiator is 5 percent by weight.

9. The cover of Claim 8, in which the adhesive coating has a low modulus of elasticity.

10. The cover of Claim 9, in which the adhesive coating is between about 0.5 mils and about 2.0 mils thick.

11. The cover of Claim 6, in which the oligomer additionally comprises (methacryloxypropyl)methyl terminated-(dimethylsiloxane).

12. The cover of Claim 11, in which the monomer comprises lauryl acrylate.

13. The cover of Claim 12, in which the concentration of (methacryloxypropyl)methyl-(dimethylsiloxane)-copolymer is about 37 percent by weight, the concentration of the (methacryloxypropyl)methyl terminated-dimethylsiloxane is about 29 percent by weight and the concentration of the photoinitiator is about 5 percent by weight.

14. The cover of Claim 13, in which the adhesive coating has a low modulus of elasticity.

15. The cover of Claim 14, in which the adhesive coating is between about 0.5 mils and about 2.0 mils thick.

16. A method of forming an adhesive on a panel suitable for effecting the releasable adherence and readherence of the panel to an article such as the face or viewing screen of a monitor, comprising:
forming on a first major surface of the panel a coating of composition comprising (1) at least one oligomer having an end group selected from vinyl and acrylate end groups; ((2) a monomer having side chains selected from n-hexyl, 2-ethylhexyl, butyl and lauryl; and (3) a photoinitiator; and
curing the coatings with UV radiation, thereby providing an adhesive coating having low-tack, self-wetting properties.

17. A method of mounting a plastic panel, having major surfaces on opposite sides thereof, to the face of a monitor, comprising:
forming a low-tack, self-wetting releasable adhesive coating on a first major surface of the panel by forming on the first major surface of the panel a coating comprising at least one oligomer having an end group selected from vinyl and acrylate end groups; a monomer having side chains selected from n-hexyl, 2-ethylhexyl, butyl and lauryl; and a photoinitiator;
curing the coatings with UV radiation;
positioning the coated first major surface of the panel against the face of the monitor; and
applying pressure against the panel to adhere the panel to the face of the monitor.

18. The method of Claim 17, further comprising: peeling the panel from the face of the monitor; repositioning the panel on the monitor; and, pressing the panel against the monitor to readhere the panel to the monitor.

19. The method of Claim 17, in which the oligomer comprises at least (methacryloxypropyl)methyl-dimethylsiloxane.

20. The method of Claim 19, in which the monomer comprises lauryl acrylate.

21. The method of Claim 20, in which the concentration of the oligomer is 57 percent by weight, the concentration of the monomer is 38 percent by weight and the concentration of the photoinitiator is 5 percent by weight.

22. The method of Claim 21, in which the adhesive coating has a low modulus of elasticity.

23. The method of Claim 22, in which the adhesive coating is between 0.5 and 2.0 mils thick.

24. The method of Claim 19, in which the oligomer additionally comprises (methacryloxypropyl)methyl terminated-dimethylsiloxane.

25. The method of Claim 24, in which the monomer comprises lauryl acrylate.

26. The method of Claim 25, in Which the concentration of (methacryloxypropyl)methyldimethylsiloxane is about 37 percent by weight, the concentration of the (methacryloxypropyl)methyl terminated-dimethylsiloxane is about 29 percent by weight and the concentration of the photoinitiator is about 5 percent by weight.

27. The method of Claim 26, in which the adhesive coating has a low modulus of elasticity.

28. The method of Claim 27, wherein the adhesive coating is between 0.5 and 2 mils thick.
